# EUROPÄISCHE PATENTANMELDUNG

(11) **EP 4 556 847 A1**
(43) Veröffentlichungstag der Anmeldung: **21.05.2025**
(21) Anmeldenummer: 24208286.5
(22) Anmeldetag: 23.10.2024
(51) Int. Cl.: G01C 9/02, G01C 19/00, H02J 50/10, H02J 50/60, H02J 50/70, H02J 50/90, H02J 7/00, H04B 5/70, F24C 7/08

(54) **VERFAHREN UND STEUEREINHEIT ZUM ERKENNEN EINER SCHRÄGEN STELLUNG EINES MOBILGERÄTES AUF EINER STELLFLÄCHE**

(30) Priorität: 15.11.2023 DE 102023131809
(71) Anmelder: Miele & Cie. KG, 33332 Gütersloh (DE)
(72) Erfinder: Wilkens, Henrik, 49080 Osnabrück (DE); Ennen, Volker, 32257 Bünde (DE); Auell, Alexander, 33613 Bielefeld (DE); Hormann, Michael, 33332 Gütersloh (DE)

(57) **Zusammenfassung**

Die Erfindung betrifft ein Verfahren (200) zum Erkennen einer schrägen Stellung eines Mobilgerätes (100) auf einer Stellfläche (105), wobei das Verfahren (200) einen Schritt des Einlesens (210) eines Lagesensorsignals (145) von einem eine räumliche Lage des Mobilgerätes (100) erfassenden Lagesensor (140) des Mobilgerätes (100) und einen Schritt des Ermittelns (220) der schrägen Stellung des Mobilgerätes (100) umfasst, wenn das Lagesensorsignal (145) ein vordefiniertes Kriterium erfüllt.

## Beschreibung

Die Erfindung betrifft ein Verfahren und eine Steuereinheit zum Erkennen einer schrägen Stellung eines Mobilgerätes auf einer Stellfläche gemäß den Hauptansprüchen.

Bei einer Aufladung eines Mobilgerätes mit einem ladbaren Energiespeicher oder Betreiben durch eine drahtlose Energieversorgung auf einer Arbeitsplatte/Kochfeld, kann dieser Energiespeicher schnell und komfortabel über die Arbeitsplatte bzw. das Kochfeld geladen werden. Allerdings ist in diesem Zusammenhang die Problematik aufgetreten, dass ein Nutzer einer solchen Versorgungstechnologie für ein entsprechendes Haushaltgerät oder allgemein ein Mobilgerät schnell ein unter diesem Gerät liegendes Teil, z. B. eine Gabel oder ein Kabel übersehen kann. Die daraus resultierende Schrägstellung des Gerätes kann dazu führen, dass der Betrieb nicht mehr (einwandfrei) möglich ist, da eine effiziente oder gleichmäßige Energieübertragung nicht mehr sichergestellt ist.

Der hier vorgestellte Ansatz stellt sich die Aufgabe, ein Konzept für die Erkennung einer schrägen Stellung eines Mobilgerätes auf einer Stellfläche zu schaffen.

Erfindungsgemäß wird diese Aufgabe durch ein Verfahren, eine Steuereinheit und ein Mobilgerät mit den Schritten bzw. Merkmalen der Hauptansprüche gelöst. Vorteilhafte Ausgestaltungen und Weiterbildungen der Erfindung ergeben sich aus den nachfolgenden Unteransprüchen.

Es wird ein Verfahren zum Erkennen einer schrägen Stellung eines Mobilgerätes auf einer Stellfläche vorgestellt, wobei das Verfahren die folgenden Schritte aufweist:
- Einlesen eines Lagesensorsignals von einem eine räumliche Lage des Mobilgerätes erfassenden Lagesensor des Mobilgerätes, und
- Ermitteln der schrägen Stellung des Mobilgerätes, wenn das Lagesensorsignal ein vordefiniertes Kriterium erfüllt.

Unter einem Mobilgerät kann beispielsweise ein Gerät verstanden werden, welches beweglich versetzt werden kann. Beispielsweise kann unter einem solchen Mobilgerät ein Haushaltsgerät bzw. Küchengerät (wie ein Kocher oder ein Mixer) oder auch ein Mobiltelefon oder dergleichen verstanden werden. Das Mobilgerät umfasst hierbei günstiger Weise einem Energiespeicher zum Liefern der Energie zum Betrieb des Mobilgerätes, wobei der Energiespeicher beispielsweise durch ein anderes Haushaltgerät wie ein Kochfeld oder dergleichen aufgeladen werden kann, beispielsweise wenn das Mobilgerät auf eine Stellfläche dieses Haushaltsgeräts platziert wird und über diese Stellfläche ein induktives Laden folgen kann. Unter einem Lagesensor kann ein Sensor verstanden werden, die die räumliche Lage des Mobilgeräts erfassen und ein entsprechendes Lagesensorsignal ausgeben kann. Unter einer räumlichen Lage kann beispielsweise eine Ausrichtung einer Haupterstreckungsachse des Mobilgerätes in Bezug auf eine Normale der Stellfläche oder auf eine Ausrichtung der Haupterstreckungsachse des Mobilgerätes oder in Bezug auf die Gravitationsrichtung, d. h. die Richtung der Erdanziehung bzw. Gravitation verstanden werden. Unter einem vorbestimmten Kriterium kann beispielsweise verstanden werden, dass die Ausrichtung der Haupterstreckungsachse des Mobilgerätes um mehr als einen Toleranzbereich von beispielsweise 10 oder 20 Grad von der Normale auf die Stellfläche abweicht.

Hier vorgeschlagene Ansatz basiert auf der Erkenntnis, dass durch die Auswertung des Lagesensorsignals schnell und eindeutig erkannt werden kann, dass das Mobilgerät in einer schrägen Stellung auf der Stellfläche platziert ist. Hierdurch kann vermutet werden, dass eine effiziente oder fehlerfreie Übertragung von elektrischer Energie durch die Stellfläche und das Mobilgerät eventuell nicht gegeben ist, sodass entsprechende Maßnahmen wie beispielsweise die Ausgabe einer Warnung oder die Unterbrechung bzw. Blockade der Energieübertragung durch die Stellfläche vorgenommen werden kann. Vorteilhaft kann somit ein ungünstiges und/oder möglicherweise sehr langes Ladeverhalten bei dem Laden des Energiespeichers des Mobilgerätes vermieden werden.

Gemäß einer besonders günstigen Ausführungsform kann im Schritt des Einlesens das Lagesensorsignal von einem Gyroskop als Lagesensor eingelesen wird. Beispielsweise kann ein solches Gyroskop als Lagesensor Beschleunigungen in mehrere Raumrichtungen erfassen und somit seine eigene räumliche Ausrichtung erkennen. Eine derartige Ausführungsform bietet den Vorteil, dass ein solches Gyroskop ein bereits technisch ausgereiftes und weit verbreitetes Bauelement darstellt, welches gegebenenfalls bereits schon im Mobilgerät verbaut ist und somit kostengünstig für eine zusätzliche Funktion eingesetzt werden kann.

Weiterhin kann gemäß einer anderen Ausführungsform des hier vorgestellten Ansatzes im Schritt des Ermittelns die schräge Stellung des Mobilgerätes dann ermittelt werden, wenn das Lagesensorsignal eine Lage des Mobilgerätes repräsentiert, die um mehr als einen Toleranzbereich von einer senkrechten Stellung des Mobilgerätes abweicht. Unter einer senkrechten Stellung des Mobilgerätes kann beispielsweise verstanden werden, wenn das Mobilgerät planar auf der Stellfläche auffliegt oder eine Bodenfläche sich parallel zur Stellfläche erstreckt. Eine derartige Ausführungsform des hier vorgeschlagenen Ansatzes bietet den Vorteil, dass geringe Unebenheiten, die beispielsweise durch kleinere Verschmutzungen auf der Stellfläche verursacht werden, nicht ein Laden des Energiespeichers des Mobilgerätes behindernd und somit der Nutzerkomfort des hier vorgestellten Ansatzes nicht unnötig beeinträchtigt wird.

Besonders vorteilhaft ist eine Ausführungsform des hier vorgeschlagenen Ansatzes, bei der im Schritt des Ermittelns die schräge Stellung des Mobilgerätes dann erkannt wird, wenn eine Stellung des Mobilgerätes um mehr als 10 Grad, insbesondere um mehr als 20 Grad von einer Senkrechten auf eine Unterlage abweicht, auf dem das Mobilgerät steht. Eine solche Ausführungsform bietet den Vorteil, dass derartige Wertebereiche des Toleranzbereichs zuverlässig eine ungünstige Stellung des Mobilgerätes in Bezug zur Stellfläche abbilden, bei der eine ungenügende oder fehlerhafte Übertragung von elektrischer Energie durch die Stellfläche mit großer Wahrscheinlichkeit nicht effizient möglich ist.

Auch kann gemäß einer anderen Ausführungsform des hier vorgeschlagenen Ansatzes ein Schritt des Ausgebens eines Erkennungssignals vorgesehen sein, das die schräge Stellung des Mobilgerätes repräsentiert, insbesondere wobei das Erkennungssignal an eine Warneinheit und/oder an eine Steuereinheit zur Steuerung einer Energieversorgungsfunktion zur Energieversorgung des Mobilgerätes, insbesondere zur Ladung eines Energiespeichers des Mobilgerätes, ausgegeben wird. Eine derartige Ausführungsform des hier vorgeschlagenen Ansatzes bietet den Vorteil, durch die Ausgabe des Erkennungssignals einem Nutzer des Mobilgerätes die Möglichkeit zur korrekten Positionierung des Mobilgerätes auf der Stellfläche zugeben und/oder eine nicht Energie-effiziente Ladung des Energiespeichers des Mobilgerätes zu vermeiden. Alternativ oder ergänzend kann das Erkennungssignal über einen Kommunikationskanal an eine Empfangseinheit innerhalb der Stellfläche, wie etwa ein Kochfeld und/oder eine Energieübertragungseinheit gesendet werden. Ein solcher Kommunikationskanal kann beispielsweise über NFC bereitgestellt werden. Die Empfangseinheit innerhalb der Stellfläche kann daraufhin eine entsprechende Ausgabe an den Nutzer ausgeben.

Zuverlässig und effizient kann gemäß einer anderen Ausführungsform des hier vorgeschlagenen Ansatzes ein Schritt der Energieversorgung des Mobilgerätes vorgesehen sein, wenn im Schritt des Ermittelns keine schräge Stellung des Mobilgerätes ermittelt wurde. Hierdurch kann auch seitens des Mobilgerätes eine Freigabe der Energieübertragung über die Stellfläche in das Mobilgerät effizient gesteuert werden.

Der hier vorgestellte Ansatz schafft ferner eine Steuereinheit, die ausgebildet ist, um die Schritte einer Variante eines hier vorgestellten Verfahrens in entsprechenden Einrichtungen oder Einheiten durchzuführen, anzusteuern bzw. umzusetzen. Auch durch diese Ausführungsvariante der Erfindung in Form einer Vorrichtung kann die der Erfindung zugrunde liegende Aufgabe schnell und effizient gelöst werden.

Die Steuereinheit kann ausgebildet sein, um Eingangssignale einzulesen und unter Verwendung der Eingangssignale Ausgangssignale zu bestimmen und bereitzustellen. Ein Eingangssignal kann beispielsweise ein über eine Eingangsschnittstelle der Steuereinheit einlesbares Sensorsignal darstellen. Ein Ausgangssignal kann ein Steuersignal oder ein Datensignal darstellen, das an einer Ausgangsschnittstelle der Steuereinheit bereitgestellt werden kann. Die Steuereinheit kann ausgebildet sein, um die Ausgangssignale unter Verwendung einer in Hardware oder Software umgesetzten Verarbeitungsvorschrift zu bestimmen. Beispielsweise kann die Steuereinheit dazu eine Logikschaltung, einen integrierten Schaltkreis oder ein Softwaremodul umfassen und beispielsweise als ein diskretes Bauelement realisiert sein oder von einem diskreten Bauelement umfasst sein.

Der hier vorgestellte Ansatz lässt sich auch in einem Mobilgerät mit einer Variante einer hier vorgestellten Steuereinheit umsetzen, insbesondere wobei das Mobilgerät ein Haushaltsgerät ist.

Von Vorteil ist weiterhin eine drahtlose Energieübertragungseinheit zur drahtlosen Energieübertragung an eine Variante eines hier vorgestellten Mobilgerätes, wobei die drahtlose Energieübertragungseinheit ausgebildet ist, um drahtlos Energie zu übertragen, wenn vom Mobilgerät ein Lagesensorsignal eingelesen wurde, das keinen Hinweis auf eine schräge Stellung des Mobilgerätes repräsentiert. Eine solche Ausführungsform bietet den Vorteil, dass durch die drahtlose Energieübertragungseinheit gezielt dann elektrische Energie abgegeben werden kann, wenn sichergestellt ist, dass das Mobilgerät sich nicht in einer schrägen Stellung und damit in einer für eine Ladung ineffizienten Position befindet. Ergänzend kann eine bereits bereitgestellte Energieübertragung unterbunden werden, sobald eine schräge Stellung erkannt wird. Hierfür kann beispielsweise ein entsprechendes Erkennungssignal an die Energieübertragungseinheit gesendet werden. Eine Kommunikationsverbindung mit der Energieübertragungseinheit kann beispielsweise über NFC oder dergleichen erfolgen.

Analog kann gemäß einer weiteren Ausführungsform ein Verfahren zum Laden eines Energiespeichers einer hier vorgestellten Variante eines Mobilgerätes vorgestellt werden, wobei das Verfahren einen Schritt zum Aufladen des Energiespeichers umfasst, wenn vom Mobilgerät ein Lagesensorsignal eingelesen wurde, das keinen Hinweis auf eine schräge Stellung des Mobilgerätes repräsentiert. Auch durch eine solche Ausführungsform lassen sich die vorstehend genannten Vorteile schnell sind.

Gemäß einer weiteren Ausführungsform wird auch eine Induktionseinheit zur Energieübertragung an eine Variante eines hier beschriebenen Mobilgerätes vorgestellt, wobei die Induktionseinheit ausgebildet ist, um elektromagnetische Energie an das Mobilgerät abzugeben, wenn vom Mobilgerät ein Lagesensorsignal eingelesen wurde, das keinen Hinweis auf eine schräge Stellung des Mobilgerätes repräsentiert. Auch durch eine solche Ausführungsform lassen sich die vorstehend genannten Vorteile schnell und effizient realisieren.

Analog kann gemäß einer weiteren Ausführungsform auch ein Verfahren zur Energieübertragung an eine Variante eines hier beschriebenen Mobilgerätes verwendet werden, wobei das Verfahren einen Schritt des Abgebens von elektromagnetischer Energie an das Mobilgerät aufweist, wenn vom Mobilgerät ein Lagesensorsignal eingelesen wurde, das keinen Hinweis auf eine schräge Stellung des Mobilgerätes repräsentiert. Auch durch eine solche Ausführungsform lassen sich die vorstehend genannten Vorteile schnell und effizient realisieren.

Von Vorteil ist weiterhin auch ein Computer-Programmprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann. Wird das Programmprodukt oder Programm auf einem Computer oder einer Steuereinheit ausgeführt, so kann das Programmprodukt oder Programm zur Durchführung, Umsetzung und/oder Ansteuerung der Schritte des Verfahrens nach einer der hier beschriebenen Ausführungsformen verwendet werden.

Auch wenn der beschriebene Ansatz anhand eines Haushaltgeräts als Mobilgerät beschrieben wird, kann der hier beschriebene Ansatz entsprechend im Zusammenhang mit einem gewerblichen oder professionellen Gerät, beispielsweise einem medizinischen Gerät, wie einem Reinigungs- oder Desinfektionsgerät, einem Kleinsterilisator, einem Großraumdesinfektor oder einer Container-Waschanlage eingesetzt werden.

Ein Ausführungsbeispiel der Erfindung ist in den Zeichnungen rein schematisch dargestellt und wird nachfolgend näher beschrieben. Es zeigt
- Figur 1: eine schematische Darstellung einer Position eines Ausführungsbeispiels eines Mobilgeräts auf eine Stellfläche;
- Figur 2: ein Ablaufdiagramm eines Ausführungsbeispiels des hier vorgestellten Ansatzes als Verfahren zum Erkennen einer schrägen Stellung eines Mobilgerätes auf einer Stellfläche;
- Figur 3: ein Ablaufdiagramm eines Ausführungsbeispiels eines Verfahrens zur Energieübertragung an eine Variante eines hier vorgestellten Mobilgerätes; und
- Figur 4: ein Ablaufdiagramm eines Ausführungsbeispiels eines Verfahrens zur Energieübertragung an eine Variante eines hier vorgestellten Mobilgerätes.

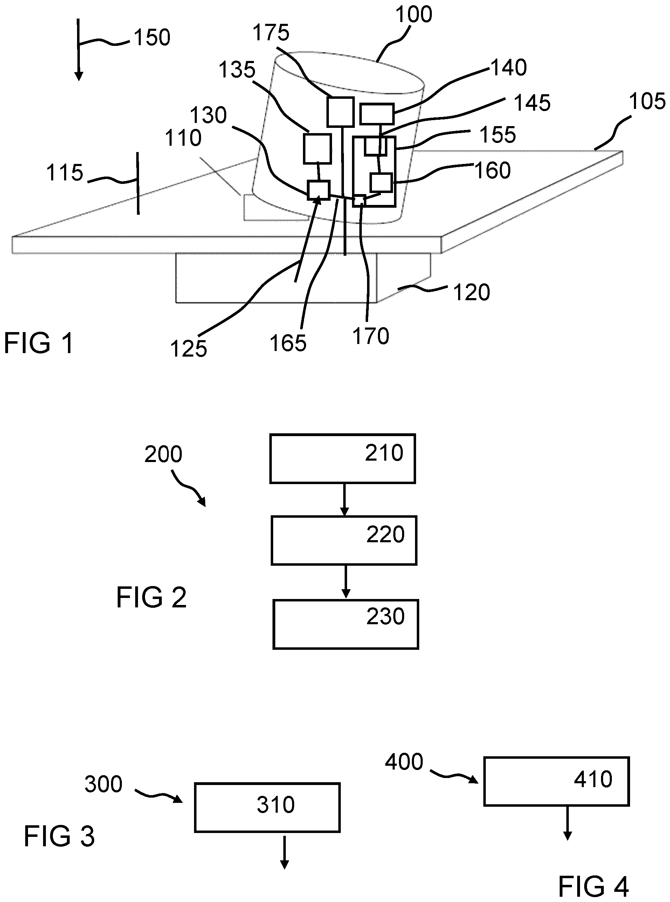

Figur 1 zeigt eine schematische Darstellung einer Position eines Ausführungsbeispiels eines Mobilgeräts 100 auf eine Stellfläche 105, wobei die Stellfläche 105 beispielsweise durch ein Kochfeld gebildet sein kann. Das Mobilgerät 100 kann beispielsweise ein Küchengerät, ein Mobiltelefon oder ganz allgemein ein tragbares Gerät sein, welches entsprechend komfortabel aufgeladen und/oder mit Energie versorgt werden können soll. Gemäß der Darstellung aus der Figur 1 ist erkennbar, dass das Mobilgerät 100 auf ein Objekt 110 gestellt wurde, welches beispielsweise eine Gabel oder ein Kabel darstellt, sodass das Mobilgerät 100 schräg, beispielsweise im Bezug auf eine Normale 115 auf die Stellfläche 105 steht. Hierdurch ist es nun durch diese Schrägstellung und den dadurch verursachten Spalt nicht mehr möglich, von einer Induktionseinheit 120, die sich unterhalb der der Stellfläche 105 befindet, ein Aussenden von elektromagnetischer Energie 125 an eine Empfangseinheit 130 des Mobilgeräts 100 durchzuführen, um beispielsweise einen Energiespeicher 135 des Mobilgeräts 100 mit dieser (umgewandelten) elektromagnetischen Energie 125 effizient zu laden. Um nun zu vermeiden, dass durch die schräge Stellung des Mobilgeräts 100 eine ineffiziente Übertragung der elektromagnetischen Energie 125 verursacht wird, umfasst das Mobilgerät nun einen Lagesensor 140, der ausgebildet ist, um eine räumliche Lage des Mobilgeräts 100 in Bezug zur Stellfläche 105 zu erkennen. Beispielsweise kann der Lagesensor 140 durch ein ein Gyrometer oder ein Gyroskop gebildet sein, wobei der Lagesensor 140 seine räumliche Orientierung beispielsweise durch die Auswertung von Beschleunigungssignalen in günstiger Weise drei Raumrichtungen ermittelt und hierbei beispielsweise die Richtung 150 der Gravitation bzw. der Erdanziehung erfasst und hieraus die Position oder Orientierung des Mobilgerät 100 in Bezug zu dieser Erdanziehung 150 ermittelt. Hierdurch kann die schräge Stellung des Mobilgeräts 100 zur Stellfläche 105 ermittelt werden, speziell wenn angenommen wird, dass die Normale 115 im Wesentlichen in die Richtung 150 der Erdanziehung verläuft. Vom Lagesensor 140 kann nun ein diese Lage beziehungsweise Position des Lagesensors 140 repräsentierendes Lagesensorsignal 145 an eine Einleseschnittstelle 150 einer Steuereinheit 155 übertragen werden, die weiterhin eine Ermittlungseinheit 160 aufweist, um aus dem Lagesensorsignal 145 die schräge Stellung des Mobilgeräts 100 zu ermitteln.

Die schräge Stellung des Mobilgeräts 100 kann dabei beispielsweise erkannt oder ermittelt werden, wenn die Ausrichtung einer Haupterstreckungsachse und/oder einer Normale auf eine Haupterstreckungsebene des Mobilgerätes 100 um mehr als einem Toleranzbereich von beispielsweise 10 oder 20 Grad von der Richtung 150 der Erdanziehung oder von der Normalen 115 abweicht. Hierdurch kann vermieden werden, dass bereits kleine Unebenheiten oder Verschmutzungen auf der Stellfläche 105 zu einem Fehler beim Laden des Energiespeichers 135 und/oder bei der Energieübertragung an das Mobilgerät 100 führen, was anderenfalls die Akzeptanz des hier vorgeschlagenen Ansatzes durch einen Nutzer oder die Nutzerin deutlich erschweren könnte.

Ansprechend auf die ermittelte schräge Stellung des Mobilgeräts 100 kann nun beispielsweise ein Erkennungssignal 165 in einer Erkennungseinheit 170 erzeugt und hiermit die drahtlose Energieübertragungseinheit 125 gesteuert werden, beispielsweise derart, dass die drahtlose Energieübertragungseinheit 125 aktiviert wird, wenn das Erkennungssignal 165 keine schräge Stellung des Mobilgeräts 100 in Bezug auf die Stellfläche 105 repräsentiert. Hierdurch kann vermieden werden, dass eine ineffiziente Verwendung von elektromagnetischer Energie 125 zur Ladung des Energiespeichers 135 verwendet wird. Denkbar ist auch, dass durch das Erkennungssignal 165 eine Warneinheit 175 aktiviert wird, wenn durch das Erkennungssignal 165 eine schräge Stellung des Mobilgerätes 100 repräsentiert, wobei die Warneinheit 175 in diesem Fall beispielsweise ein akustisches, optisches und/oder haptische Signal ausgeben kann, damit ein Nutzer oder einer Nutzerin des Mobilgerätes 100 beispielsweise zu einer korrekten Positionierung des Mobilgeräts 100 veranlasst werden kann.

Denkbar ist auch, dass die Induktionseinheit 120 ansprechend auf das Erkennungssignal 165 oder auf das Lagesensorsignal 145 die Ausgabe der elektromagnetische Energie 125 steuert, beispielsweise dann unterdrücken, wenn das Erkennungssignal 165 und/oder das Lagesensorsignal 145 einen Hinweis darauf liefert, dass das Mobilgerät 100 sich in einer schrägen Stellung befindet. Andersherum kann auch die Induktionseinheit 120 ausgebildet sein, ansprechend auf das Erkennungssignal 165/oder auf das Lagesensorsignal 145 die Ausgabe von elektromagnetische Energie 125 freizugeben, wenn aus dem Erkennungssignal 165 und/oder dem Lagesensorsignal 145 ein Hinweis darauf entnommen werden kann, dass das Mobilgerät 100 sich nicht in einer schrägen Stellung befindet.

Zusammenfassend kann ausgeführt werden, dass, wenn sich zwischen der Arbeitsplatte/Kochfeld als Stellfläche 105 und dem Mobilgerät 100 ein Gegenstand bzw. ein sogenanntes False Object 110 befindet, dies zu einer Schrägstellung des Mobilgerätes 100 führen kann. Beispiele für einen solchen Gegenstand bzw. ein False Object können kleinere Küchengegenstände oder ähnliches sein. Diese Schrägstellung des Mobilgerätes 100 gilt es zu vermeiden, um eine einwandfreie magnetische Kopplung von der Induktionseinheit 120 bzw. einer Einrichtung zur Energieübertragung zum Mobilgerät 100 sicherzustellen. Die Schrägstellung kann beispielsweise durch Lagesensoren, wie z. B. einem Gyrometer bestimmt werden. Dazu sollte das Mobilgerät 100 mindestens einen Sensor 140 umfassen. Wird durch einen solchen Lagesensor 140 erkannt, dass ein bestimmter Wert der Schrägstellung überschritten ist, kann die Induktionseinheit 120 bzw. allgemein eine Einrichtung zur Energieübertragung abgeschaltet werden. Dem Endkunden bzw. einem Nutzer des Mobilgerätes 100 kann dieser Betriebszustand kenntlich gemacht werden, beispielsweise durch die Ausgabe eines Warnsignals mittels der Warneinheit 175. Ein manuelles Eingreifen zum Entfernen des False Objects bzw. des Gegenstandes 110 vom Endkunden bzw. Nutzer kann dann beispielsweise vorgenommen werden. Sollte sich somit ein Mobilgerät 100 auf einem Gegenstand 110 bzw. "false object" befinden, kann die daraus resultierende Schrägstellung dazu führen, dass die magnetische Kopplung nicht mehr einwandfrei funktioniert. Das Mobilgerät 100 lässt sich dann unter Umständen nicht mehr betreiben. Durch den hier vorgestellten Ansatz kann somit erreicht werden, dass das Mobilgerät 100 möglichst immer plan zur Arbeitsplatte/Kochfeld steht und somit eine einwandfreie magnetische Kopplung mit der Induktionseinheit 120 vorherrscht. Bei einer Schrägstellung ist der Betrieb vom Mobilgerät 100 beispielsweise zu untersagen oder technisch zu sperren. Der Kunde kann jedoch einfach Abhilfe schaffen, indem der das Mobilgerät 100 anhebt und den Gegenstand 110 bzw. das Objekt entfernt, bevor der das Mobilgerät 100 wieder auf der Stellfläche abstellt. Der hier vorgestellte Ansatz ermöglicht einen sichereren Betriebszustand des Mobilgerätes 100 auf der Stellfläche 105, da erkannt werden kann, ob sich das Mobilgerät 100 auf einem Fremdkörper 110, dem sog. False Object, befindet oder nicht.

Figur 2 zeigt ein Ablaufdiagramm eines Ausführungsbeispiels des hier vorgestellten Ansatzes als Verfahren 200 zum Erkennen einer schrägen Stellung eines Mobilgerätes auf einer Stellfläche. Das Verfahren 200 umfasst einen Schritt 210 des Einlesens eines Lagesensorsignals von einem eine räumliche Lage des Mobilgerätes erfassenden Lagesensor des Mobilgerätes und einen Schritt 220 des Ermittelns der schrägen Stellung des Mobilgerätes, wenn das Lagesensorsignal ein vordefiniertes Kriterium erfüllt. Optional kann auch ein Schritt 230 des Ausgebens eines Erkennungssignals vorgesehen sein, das die schräge Stellung des Mobilgerätes repräsentiert, insbesondere wobei das Erkennungssignal an eine Warneinheit und/oder an eine Steuereinheit zur Steuerung einer Energieübertragungsfunktion zur Ladung eines Energiespeichers und/oder zur Energieübertragung an das Mobilgerät ausgegeben wird.

Figur 3 zeigt ein Ablaufdiagramm eines Ausführungsbeispiels eines Verfahrens 300 zur Energieübertragung an eine Variante eines hier vorgestellten Mobilgerätes, wobei das Verfahren 200 einen Schritt 310 zum Aufladen des Energiespeichers umfasst, wenn ein Lagesensorsignal und/oder ein Erkennungssignal eingelesen wurde, das keinen Hinweis auf eine schräge Stellung des Mobilgerätes repräsentiert.

Figur 4 zeigt ein Ablaufdiagramm eines Ausführungsbeispiels eines Verfahrens 400 zur Energieübertragung an eine Variante eines hier vorgestellten Mobilgerätes, wobei das Verfahren 400 einen Schritt 410 des Abgebens von elektromagnetischer Energie an das Mobilgerät aufweist, wenn vom Mobilgerät ein Lagesensorsignal und/oder ein Erkennungssignal eingelesen wurde, das keinen Hinweis auf eine schräge Stellung des Mobilgerätes repräsentiert.

## Patentansprüche

1. Verfahren (200) zum Erkennen einer schrägen Stellung eines Mobilgerätes (100) auf einer Stellfläche (105), wobei das Verfahren (200) die folgenden Schritte aufweist:
- Einlesen (210) eines Lagesensorsignals (145) von einem eine räumliche Lage des Mobilgerätes (100) erfassenden Lagesensor (140) des Mobilgerätes (100), und
- Ermitteln (220) der schrägen Stellung des Mobilgerätes (100), wenn das Lagesensorsignal (145) ein vordefiniertes Kriterium erfüllt.

2. Verfahren (200) gemäß Anspruch 1, bei dem im Schritt (210) des Einlesens das Lagesensorsignal (145) von einem Gyroskop als Lagesensor (140) eingelesen wird.

3. Verfahren (200) gemäß einem der vorangegangenen Ansprüche, bei dem im Schritt (220) des Ermittelns die schräge Stellung des Mobilgerätes (100) dann ermittelt wird, wenn das Lagesensorsignal (145) eine Lage des Mobilgerätes (100) repräsentiert, die um mehr als einen Toleranzbereich von einer senkrechten Stellung des Mobilgerätes (100) abweicht.

4. Verfahren (200) gemäß Anspruch 3, bei dem im Schritt (220) des Ermittelns die schräge Stellung des Mobilgerätes (100) dann erkannt wird, wenn eine Stellung des Mobilgerätes (100) um mehr als 10 Grad, insbesondere um mehr als 20 Grad von einer Senkrechten (115) auf die Stellfläche (105) abweicht, auf der das Mobilgerät (100) steht und/oder um mehr als 10 Grad, insbesondere um mehr als 20 Grad von einer Gravitationsrichtung (150).

5. Verfahren (200) gemäß einem der vorangegangenen Ansprüche mit einem Schritt (230) des Ausgebens eines Erkennungssignals (165), das die schräge Stellung des Mobilgerätes (100) repräsentiert, insbesondere wobei das Erkennungssignal (165) an eine Warneinheit (175) und/oder an eine Ladeeinheit (130) zur Steuerung einer Ladefunktion zur Ladung eines Energiespeichers (135) des Mobilgerätes (100) ausgegeben wird.

6. Verfahren (200) gemäß einem der vorangegangenen Ansprüche, wobei ein Schritt der drahtlosen Energieversorgung des Mobilgerätes (100) vorgesehen ist, wenn im Schritt (220) des Ermittelns keine schräge Stellung des Mobilgerätes (100) ermittelt wurde.

7. Steuereinheit (155), die ausgebildet ist, um die Schritte (210, 220, 230) des Verfahrens (200) gemäß einem der vorangegangenen Ansprüche in entsprechenden Einheiten (150, 160, 170) auszuführen und/oder anzusteuern.

8. Mobilgerät (100) mit einer Steuereinheit (150) gemäß Anspruch 7, insbesondere wobei das Mobilgerät (100) ein Haushaltgerät ist.

9. Drahtlose Energieübertragungseinheit (130) zur drahtlosen Energieübertragung an ein Mobilgerätes (100) gemäß Anspruch 8, wobei die Energieübertragungseinheit (130) ausgebildet ist, um Energie zu übertragen, wenn ein Lagesensorsignal (145) und/oder ein Erkennungssignal (165) eingelesen wurde, dass keinen Hinweis auf eine schräge Stellung des Mobilgerätes (100) repräsentiert.

10. Verfahren (300) zur Energieversorgung eines Mobilgerätes (100) gemäß Anspruch 8, wobei das Verfahren (200) einen Schritt (310) zur Energieversorgung des Mobilgerätes (100) umfasst, wenn ein Lagesensorsignal (145) und/oder ein Erkennungssignal (165) eingelesen wurde, dass keinen Hinweis auf eine schräge Stellung des Mobilgerätes (100) repräsentiert.

11. Induktionseinheit (120) zur Energieversorgung eines Mobilgerätes (100) gemäß Anspruch 8, wobei die Induktionseinheit (120) ausgebildet ist, um elektromagnetische Energie (125) an das Mobilgerät (100) abzugeben, wenn vom Mobilgerät (100) ein Lagesensorsignal (145) und/oder ein Erkennungssignal (165) eingelesen wurde, dass keinen Hinweis auf eine schräge Stellung des Mobilgerätes (100) repräsentiert.

12. Computer-Programmprodukt mit Programmcode zur Durchführung des Verfahrens (200) nach einem der Ansprüche 1 bis 6 und/oder 10, wenn das Computer-Programmprodukt auf einer Steuereinheit (150) oder einer Vorrichtung ausgeführt wird.
